## Europäisches Patentamt
## European Patent Office
## Office européen des brevets

(11) Publication number: **0 184 104**
**B1**

(12) **EUROPEAN PATENT SPECIFICATION**

(45) Date of publication of patent specification: **04.04.90**

(21) Application number: **85114942.7**

(22) Date of filing: **26.11.85**

(51) Int. Cl.⁵: **F 02 B 67/04, F 16 H 15/50, F 16 H 59/06**

(54) Accessory drive device in engine.

(30) Priority: **30.11.84 JP 182907/84**

(43) Date of publication of application:
**11.06.86 Bulletin 86/24**

(45) Publication of the grant of the patent:
**04.04.90 Bulletin 90/14**

(84) Designated Contracting States:
**DE FR GB**

(56) References cited:
**DE-A-2 303 562**
**GB-A- 795 234**
**GB-A-2 131 504**
**JP-A-58 200 838**
**JP-U-5 886 434**
**US-A-2 836 994**

(73) Proprietor: **MITSUBISHI DENKI KABUSHIKI KAISHA**
**2-3, Marunouchi 2-chome Chiyoda-ku**
**Tokyo 100 (JP)**

(72) Inventor: **Kaneyuki, Kazutoshi c/o MITSUBISHI DENKI K.K.**
**Himeji Works 840, Chiyodacho Himeji-shi**
**Hyogo (JP)**

(74) Representative: **Eisenführ, Speiser & Strasse**
**Martinistrasse 24**
**D-2800 Bremen 1 (DE)**

Courier Press, Leamington Spa, England.

## Description

The invention relates to a device for driving acccessories such as an alternator, a cooling water pump, an air-conditioning compressor or the like, utilizing power taken from an output shaft of an engine; said device comprising an infinitely variable friction transmission system, the input shaft of which is coupled to the output shaft of the engine, and a transmission output member of which is coupled to the accessory, the transmission ratio of the transmission system being controlled by a hydraulic piston/cylinder assembly in dependence of the speed of the transmission output member.

In an engine of an automobile or the like accessories have to be driven. Since the accessory drive is accompanied with large power loss during the high speed running of the engine, various methods have been proposed in order to avoid such high power loss.

In Japanese utility model application No. 86434/1983 a variable pitch pulley drive is disclosed in which the effective pitch diameter is varied in order to change the transmission ratio so as to control the accessory drive speed. JP—U—86434/1983 discloses a device for driving accessories such as an alternator, a cooling water pump, an air-conditioning compressor or the like, utilizing power taken from an output shaft of an engine, said device comprising an infinitely variable function transmission system, the input shaft of which is coupled to the output shaft of the engine, and a transmission output member of which is coupled to the accessory, the transmission ratio of the transmission system being controlled by a hydraulic piston/cylinder assembly in dependence of the speed of the transmission output member. In this device, however, high hydraulic power is required to control the movable sheave of the drive pulley, and the structure of the hydraulic actuator is considerably complicated and the whole device requires comparatively wide installation space projecting in the axial direction of the engine crank shaft. Therefore, such a device is not suitable for driving auxiliary drives in a front wheel drive car with the engine laterally installed.

Additionally, from Japanese patent application No. 200838/1983 a reduction drive system is known comprising a planetary reduction gear and a one-directional clutch, as well as a direct-coupled drive system comprising a lock-up clutch composed of a hydraulic piston between the crank shaft and a crank pulley of the engine. By this device the speed of the crank pulley can be selectively changed in two stages. Such a stepwise changing of the speed, however, leads to shocks in the driving force, so that the running stability of the engine is effected. A similar drive is also known from DE—A—23 03 562.

US—A—2836994 discloses a frictional cone transmission system which is quite similar to the frictional cone system as used in the example of the present invention. However, US—A—2 836 994 does not relate to an accessory drive.

In order to eliminate the above-mentioned disadvantages in the prior art devices, it is an object of the present invention to provide a device for driving accessories, in which driving shocks or noises do not occur during the change or variation of the transmission ratio, and in which only a small installation space is required to enable the replacement of a usual crank pulley by the inventive device. With such a device the rotational speed of the accessory drive pulley shall be automatically varied with respect to the engine rotational speed, so that it becomes approximately constant during the engine running at intermediate or high speeds.

The accessory driving device according to the invention is a device for driving, for instance, an alternator, a cooling water pump, an air-conditioning compressor, utilizing power taken from an output shaft of an engine, said device comprising:

a non-stage frictional transmission system with a differential planetary mechanismus having an annular closed room filled with transmission oil, an input shaft driven by said engine output shaft and rotated at the same rotational speed, and a transmission output member rotatably supported on said input shaft and transmitting power to said accessory; a hydraulic piston/cylinder assembly for setting the non-stage frictional transmission; and a pilot tube rotating within the annular closed room together with the transmission output member for supplying the hydraulic piston/cylinder assembly with oil pressure in dependence of the rotational speed of the transmission output member.

Preferred embodiments of the invention are defined in the dependent claims.

According to the structure of the inventive device, a transmission and a transmission actuator can be constituted integrally in compact structure within an inner circumferential space of a usual crank pulley, frictional driving system enables the running at low noise, and mechanism of the transmission actuator of hydraulic action by skillfully utilizing the skimming action of a Pilot tube can be manufactured simply at low cost.

An accessory driving device similar to the driving device of this invention is described in EP—A—0 184 709 which claims the same priority date (30.11.84) as this invention.

Brief description of the drawings

Fig. 1 is a side view of an accessory drive device of an engine according to the invention, partly cut away to reveal the inside thereof;

Fig. 2 is a sectional view taken along line II—II of Fig. 1;

Fig. 3 shows a planetary cone and a member contacting thereto in the drive device shown in Fig. 1 illustrating contacting point and relative dimension; and

Fig. 4 is a graph illustrating rotational speed of an accessory drive pulley versus rotational speed of an engine.

### Detailed description of the preferred embodiment

An embodiment of the invention will now be described referring to the accompanying drawings.

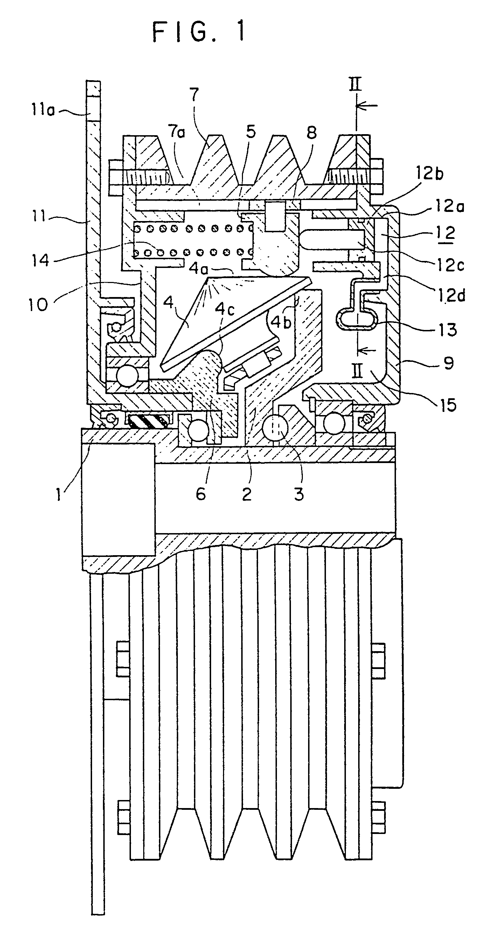

In Fig. 1, reference numeral 1 designates an input shaft directly coupled to an output shaft such as a crank shaft of an engine, numeral 2 an input transmission member supported by the input shaft, and numeral 3 a cam device for generating pressure interposed between the input shaft 1 and the input transmission member 2. Numeral 4 designates a plurality of cone friction wheels or planetary cones, each composed of a frictional transmission surface 4a on a conical surface, a frictional transmission surface 4b on a bottom surface of cone, and a frictional transmission surface 4c on a circumferential surface of a shaft leading to the bottom surface of the cone. Numeral 5 designates a shifting ring which is engaged in frictional engagement with the frictional transmission surface 4a of the planetary cone 4 and moved in the axial direction so as to vary the frictional transmission radius of the planetary cone 4, and numeral 6 on orbit ring which is engaged in frictional engagement with the frictional transmission surface 4c of the circumferential surface of the shaft of the planetary cone 4 and is non-rotatable and guides rotation of the planetary cone 4 about the input shaft 1, i.e., the revolution. The frictional transmission surface 4b of the bottom surface of the planetary cone 4 is engaged in frictional engagement with outer circumferential edge of the input transmission member 2. The cam force of the cam device 3 acting to move the input transmission member 2 in the axial direction acts as the pressure in the normal direction of the frictional transmission surfaces 4a, 4b, 4c of the planetary cone 4, and its acting direction and amount are set to as to take balance as vector with the reaction applied to the gear shifting ring 5, the input transmission member 2 and the orbit ring 6, respectively. Numeral 7 designates an accessory drive pulley, numeral 7a a plurality of key grooves on the inner circumferential surface of the pulley 7 in the axial direction, and numeral 8 a roller key which transmits the rotational force of the gear shifting ring 5 to the pulley 7 and allows the movement in the axial direction and is engaged with the groove 7a. Numerals 9, 10 designate side plates to support the pulley 7 at both ends. Numeral 11 designates a stationary plate which fixedly supports the orbit ring 6 and is securely supported at a mounting part 11a to the stationary member of the engine.

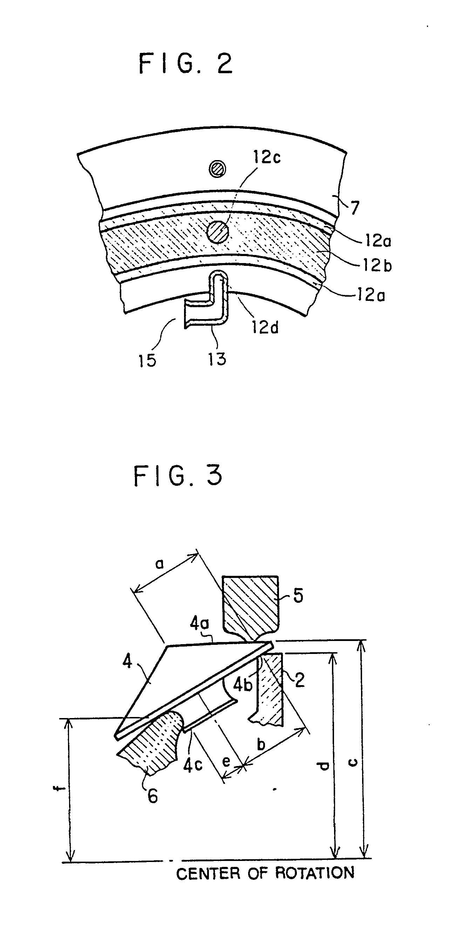

A transmission actuator to move the shifting ring 5 in the axial direction comprises a hydraulic piston/cylinder assembly 12 constituted to push the shifting ring 5 in the axial direction. The piston/cylinder assembly 12 is provided with a cylinder 12a integral with the side plate 9, a ring-like piston 12b, a plurality of rods 12c fixed to the piston 12b and abutting on the gear shifting ring 5, and a flow path 12d to guide the acting hydraulic pressure. Numeral 13 designates a Pitot tube which communicates with the flow path 12d at one end and has the other end opened forward in the rotational direction of the side plate 9 as shown in Fig. 2. Numeral 14 designates a return spring.

In the device constituted as above described, the closed space surrounded by the pulley 7, the side plates 9, 10 and the input shaft 1 is filled with a frictional transmission oil 15 as medium for the frictional transmission.

Operation of the embodiment in the above constitution will be described. The driving force of the input shaft 1 is transmitted through the cam device 3 to the input transmission member 2, thereby the planetary cone 4 rotates on its own axial center, and at the same time performs the revolution around the axial center of the input shaft 1 along the frictional transmission surface 4c with the orbit ring 6 being the stationary element. The shifting ring 5 engaged in frictional engagement with the frictional transmission surface 4a of the planetary cone 4 is rotated around the axial center of the input shaft 1 at the speed determined on the basis of the differential action between the self-rotation and the revolution (about input shaft 1) of the planetary cone 4 and the transmission radius ratio, and drives the pulley 7 through the roller key 8. The rotational speed ratio between the input shaft 1 and the shifting ring 5 can be set by moving the shifting ring 5 in the axial direction so that the effective radius ratio of the frictional transmission between the input shaft 1 and the shifting ring 5 becomes a prescribed value.

Fig. 3 illustrates effective radius a–f of each element of the transmission system in the drive device shown in Fig. 1. Assuming that rotational speed of the input shaft 1 be $N_1$ and rotational speed of the gear shifting ring 5 be $N_2$, it follows that

$$N_2/N_1 = \frac{d(ec+fa)}{c(ed+fb)}$$

If the value of $a$ is varied, $N_2/N_1$, i.e., ratio of the rotational speed of the pulley 7 to that of the input shaft 1, can be varied.

Effective radius a–f is as follows:

a: effective radius of the frictional transmission surface 4a of the planetary cone 4 to the shifting ring 5.

b: effective radius of the frictional transmission surface 4b of the bottom surface of the planetary cone 4 to the input transmission member 2.

c: inner radius of the shifting ring 5.

d: effective radius of the input transmission member 2.

e: effective radius of the frictional transmission surface 4c of the circumferential surface of the shaft of the planetary cone 4 to the orbit ring 6.

f: effective radius of the orbit ring 6.

Position of the shifting ring 5 in the axial direction is controlled by the hydraulic piston/cylinder assembly 12 as hereinafter described.

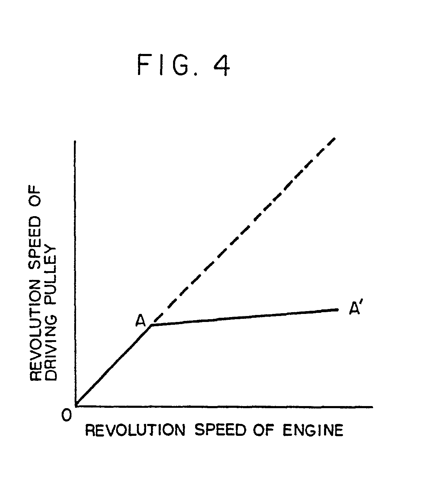

Since the Pitot tube 13 rotates integrally with the side plate 9, the frictional transmission oil 15 is received at the opening of the Pitot tube 13 thereby pump action is effected to introduce the hydraulic pressure through the flow path 12d to the hydraulic cylinder 12a. The hydraulic pressure generated then is proportional to square of the relative rotational speed between the Pitot tube 13 and the frictional transmission oil 15. On the other hand, since the rotational speed of the Pitot tube 13 is equal to that of the pulley 7, output of the hydraulic cylinder 12 varies depending on the rotational speed of the pulley 7. For example, when the input of the hydraulic piston/cylinder assembly 12 increases, the shifting ring 5 is pushed towards the cone vertex of the planetary cone 4. As a result, speed of the pulley 7 is reduced and the hydraulic pressure from the Pitot tube 13 is reduced and output of the hydraulic piston/cylinder assembly is decreased by receiving the negative feedback. In the reverse operation, the positive feedback is added. Accordingly, since output of the hydraulic piston/cylinder assembly 12 continuously controls the axial position of the shifting ring 5 in equilibrium to the reaction of the return ring 14, the rotational speed of the pulley 7 can be made approximately constant regardless of variation in the rotational speed of the input shaft 1. In Fig. 4 illustrating an example of the rotational speed control characteristics, abscissa represents the engine rotational speed and ordinate represents the accessory drive pulley rotational speed in the accessory drive device of the invention. In the region shown by line OA of Fig. 4, the rotational speed of the engine, i.e., the input shaft 1 is low and also the rotational speed of the pulley 7 is low and output of the hydraulic piston/cylinder assembly 12 is low, thereby when the shifting ring 5 is pushed towards the cone base of the planetary cone 4 by load of the return spring 14, the pulley 7 has the same rotational speed as that of the engine. In the region shown by line AA' of Fig. 4, output of the hydraulic cylinder 12 is in equilibrium to the reaction of the return spring 14, and even if the engine rotational speed rises the rotational speed of the pulley 7 is controlled approximately constant. In addition, the pulley 7 may be constituted by other transmission output member such as a sprocket or a gear.

According to the invention as above described, since the nonstage transmission of the differential planetary mechanism of frictional transmission type and the transmission actuator comprising the hydraulic piston/cylinder assembly are constituted integrally in compact structure within the inner circumferential space of a usual crank pulley, the installation space is as wide as to enable the replacement for the usual crank pulley. The frictional transmission is not accompanied with noise during running. The mechanism of the transmission actuator is simple and made at low cost, and the rotational speed of the accessory drive pulley can be controlled approximately constant from intermediate range of the engine rotational speed, thereby energy saving operation of the accessory improves the fuel cost of engine and the power performance.

## Claims

1. An accessory driving device for driving, for instance an alternator, a cooling water pump, an air-conditioning compressor, utilizing power taken from an output shaft of an engine, said device comprising:
   a non-stage frictional transmission system with a differential planetary mechanismus having an annular closed room filled with transmission oil (15), an input shaft (1) driven by said engine output shaft and rotated at the same rotational speed, and a transmission output member (7) rotatably supported on said input shaft (1) and transmitting power to said accessory;
   a hydraulic piston/cylinder assembly (12) for setting the non-stage frictional transmission; and
   a pilot tube (13) rotating within the annular closed room together with the transmission output member (7) for supplying the hydraulic piston/cylinder assembly (12) with oil pressure in dependence of the rotational speed of the transmission output member (7).

2. A device as set forth in claim 1, characterized in that the non-stage frictional transmission system is a planetary cone system known per se, having a stationary orbit ring (6), a planetary cone (4) rotatable on and rotated with the input shaft (1) and engaging an input transmission member (2) and a shifting ring (5) supported on the transmission output member (7) and movable in axial direction for changing the transmission ratio of the transmission system; and
   that said input shaft (1), said transmission output member (7) and said orbit ring (6) constitute the annular closed room for housing said planetary cone (4), said input transmission member (2), said shifting ring (5), said hydraulic piston/cylinder assembly (12) and said pitot tube (13).

3. A device as set forth in claim 2, wherein said shifting ring (5) is guided along a plurality of key grooves (7a) formed on the inner circumferential surface of said transmission output member (7) and extending along the axial direction thereof.

4. A device as set forth in any of the preceding claims, wherein said transmission output member (7) is a pulley.

## Patentansprüche

1. Hilfsantriebsvorrichtung zum Antreiben eines Hilfsaggregats, z.B. eines Wechselstromgenerators, einer Kühlwasserpumpe, und/oder eines Klimaanlagen-Komperssors, mittels Antriebsleitung von der Ausgangswelle eines Motors;
   mit einem stufenlosen Reibgetriebesystem in der Form eines Differential-Planetenmechanismus, der in einem ringförmigen, mit Transmissionsöl (15) gefüllten, geschlossenen Raum angeordnet ist und der eine durch die Ausgangswelle des Motors angetriebene und mit gleicher Drehzahl umlaufende Eingangswelle (1) hat sowie ein Getriebeausgangsteil (7), das drehbar auf der Eingangswelle (1) gelagert ist und Leistung an das Hilfsaggregat überträgt;

mit einer Hydraulik-Zylinder-Anordnung (12) zum Einstellen des stufenlosen Reibgetriebes; und

mit einem Pitotrohr (13), das innerhalb des ringförmigen, geschlossenen Raumes zusammen mit dem Getriebeausgangsteil (7) umläuft und der Hydraulik-Kolben-Zylinder-Anordnung (12) Öldruck abhängig von der Drehzahl des Getriebeausgangsgliedes (7) zuführt.

2. Vorrichtung nach Anspruch 1, dadurch gekennzeichnet, daß das stufenlose Reibgetriebesystem ein Planetenkegelsystem an sich bekannter Bauart ist;

mit einem stationären Orbitrig (6) und einem Planetenkegel (4), der auf der Eingangswelle (1) drehbar gelagert ist, mit dieser umläuft und der an einem Eingangsgetriebeglied (2) sowie an einem auf dem Getriebeausgangsteil (7) gelagerten Verstellring (5) angreift und in Axialrichtung bewegbar ist, um das Übersetzungsverhältnis des Getriebes zu verändern; und

daß die Eingangswelle (1), das Getriebeausgangsteil (7) und der Orbitring (6) den ringförmigen, geschlossenen Raum zur Aufnahme des Planetenkegels (4), des Eingangsgetriebegliedes (2), des Verstellringes (5), der Hydraulik-Kolben-Zylinder-Anordnung (12) und des Pitotrohres (13) bilden.

3. Vorrichtung nach Anspruch 2, dadurch gekennzeichnet, daß der Verstellring (5) entlang einer Mehrzahl von Keilnuten (7a) an der inneren Umfangsfläche des Getriebeausgangsteils (7) geführt ist und sich in dessen Axialrichtung erstreckt.

4. Vorrichtung nach einem der vorstehenden Ansprüche, dadurch gekennzeichnet, daß das Getriebeausgangsteil (7) eine Riemenscheibe ist.

**Revendications**

1. Dispositif d'entraînement d'organe auxiliaire destiné à entraîner, par exemple, un alternateur, une pompe à eau de refroidissement, un compresseur de conditionnement d'air, en utilisant une énergie tirée d'un arbre secondaire d'un moteur à combustion interne, ledit dispositif comportant:

un système de transmission à frottement continue pourvu d'un mécanisme planétaire de différentiel qui possède une chambre fermée annulaire remplie d'une huile de transmission (15), un arbre primaire (1) entraîné par ledit arbre secondaire du moteur à combustion interne pour tourner à la même vitesse de rotation, et un élément de transmission secondaire (7) monté rotatif sur ledit arbre primaire (1) et qui transmet une énergie audit organe auxiliaire;

un ensemble de piston/cylindre hydraulique (12) destiné à régler la transmission à frottement continue; et un tube de Pitot (13) qui tourne à l'intérieur de la chambre fermée annulaire conjointement avec l'élément de transmission secondaire (7), pour fournir à l'ensemble de piston/cylindre hydraulique (12) une pression d'huile en fonction de la vitesse de rotation de l'élément de transmission secondaire (7).

2. Dispositif tel que défini dans la revendication 1, caractérisé en ce que le système de transmission continue est un système à cône planétaire connu en soi, comportant une couronne orbitale fixe (6), un cône planétaire (4) mobile en rotation sur et conjointement avec l'arbre primaire (1) et venant en prise avec un élément de transmission primaire (2), et un anneau de déplacement (5) monté sur l'élément de transmission secondaire (7) et mobile dans une direction axiale pour modifier le rapport de transmission du système de transmission; et en ce que ledit arbre primaire (1), ledit élément de transmission secondaire (7) et ladite couronne orbitale (6) forment la chambre fermée annulaire destinée à loger ledit cône planétaire (4), ledit élément de transmission primaire (2), ledit anneau de déplacement (5), ledit ensemble de piston/cylindre hydraulique (12) et ledit tube de Pitot (13).

3. Dispositif tel que défini dans la revendication 2, dans lequel ledit anneau de déplacement (5) est guidé le long d'une série de rainures de clavette (7a) définies sur la surface circonférentielle intérieure dudit élément de transmission secondaire (7) et s'étend le long de la dierction axiale de celui-ci.

4. Dispositif tel que défini dans l'une quelconque des revendications précédentes, dans lequel ledit élément de transmission secondaire (7) est une poulie.

FIG. 1

# FIG. 2

# FIG. 3

CENTER OF ROTATION

FIG. 4

REVOLUTION SPEED OF DRIVING PULLEY

REVOLUTION SPEED OF ENGINE

A

A'

0